# EUROPÄISCHE PATENTSCHRIFT

(11) **EP 0 742 843 B1**
(45) Veröffentlichungstag und Bekanntmachung des Hinweises auf die Patenterteilung: **09.02.2000**
(21) Anmeldenummer: 95936925.7
(22) Anmeldetag: 30.11.1995
(51) Int. Cl.: C22B 11/02, C22B 11/06, B01J 8/02, B01J 8/08

(54) **VERFAHREN ZUR AUFBEREITUNG VON MATERIALIEN SOWIE VERWENDUNG EINER EINRICHTUNG ZUR DURCHFÜHRUNG DIESES VERFAHRENS**
MATERIAL BENEFICIATION PROCESS AND USE OF A DEVICE FOR CARRYING OUT THE PROCESS
PROCEDE D'ENRICHISSEMENT DE MATERIAUX ET UTILISATION D'UN DISPOSITIF POUR LA MISE EN OEUVRE DU PROCEDE

(30) Priorität: 01.12.1994 CH 364594
(43) Veröffentlichungstag der Anmeldung: 20.11.1996
(73) Patentinhaber: PRIOR ENGINEERING AG, 8006 Zürich (CH)
(72) Erfinder: PRIOR, Adalbert, A-6841 Götzis (CH)
(74) Vertreter: Collin, Hans, Dipl.-Ing. Dr.
(86) Internationale Anmeldenummer: CH9500282
(87) Internationale Veröffentlichungsnummer: WO9617097

(56) Entgegenhaltungen:
- DE-B- 1 052 367
- FR-A- 1 547 653
- FR-A- 2 264 880
- GB-A- 798 712
- US-A- 3 867 137
- US-A- 3 998 926
- US-I- T 820 709
- PATENT ABSTRACTS OF JAPAN vol. 013 no. 562 (C-665) ,13.Dezember 1989 & JP,A,01 234532 (TANAKA KIKINZOKU KOGYO KK) 19.September 1989,
- ERZMETALL, Bd. 43, Nr. 1, 1.Januar 1990 WEINHEIM, DE, Seiten 41-44, XP 000100977 PANIAS D ET AL 'GOLD EXTRACTION FROM PYRITE CINDERS BY HIGH TEMPERATURE CHLORINATION'

## Beschreibung

Die vorliegende Erfindung betrifft ein Verfahren zur Aufbereitung eines Materials, welches Edelmetalle bzw. Metalle der Platingruppe sowie Verunreinigungen enthält, sowie die Verwendung einer Einrichtung zur Durchführung dieses Verfahrens.

In der Praxis fallen Materialien an, die einen Gesamtgehalt von mindestens 20% oder mehr Gold, Platin, Palladium, Rhodium und Iridium aufweisen. Solche Materialien enthalten meistens Verunreinigungen, welche Begleitmetalle der genannten Elemente oder/und andere Elemente sind, welche mit Sauerstoff, Wasserstoff und Chlorgas flüchtige Verbindungen bzw. Chlorverbindungen bilden. Solche Materialien können Rückstände aus anderen Verfahren, Gemische oder Legierungen sein.

Die Aufgabe der vorliegenden Erfindung ist, ein Verfahren anzugeben, in welchem die genannten Materialien derart aufbereitet werden, dass ein konzentrierter Rückstand von Gold, Platin, Palladium, Rhodium oder/und Iridium zurück bleibt, wobei diese Aufbereitung möglichst wirtschaftlich und möglichst umweltfreundlich durchgeführt werden soll.

Diese Aufgabe wird beim Verfahren der eingangs genannten Gattung erfindungsgemäß dadurch gelöst, daß das Material zunächst einer oxidierenden Behandlung bei einer Temperatur unterzogen wird, welche innerhalb eines ersten Temperaturbereiches zwischen 200°C und 800°C liegt,daß das Material anschließend einer reduzierenden Behandlung bei einer Temperatur unterzogen wird, welche innerhalb eines zweiten Temperaturbereiches zwischen 200°C und 1000°C liegt, und daß das Material schließlich bei einer Temperatur chloriert wird, welche innerhalb eines dritten Temperaturbereichs zwischen 800 °C und 1300°C liegt.

Dabei ist bevorzugt, daß der erste Temperaturbereich zwischen 400°C und 500°C liegt, daß der zweite Temperaturbereich zwischen 600°C und 800°C liegt, und daß der dritte Temperaturbereich zwischen 900°C und 1150°C liegt.

Weiterhin ist bevorzugt, daß die Behandlung des Materials in den einzelnen Stufen durch gasförmige Substanzen erfolgt, wobei die Oxidation durch Sauerstoff oder ein Sauerstoff enthaltendes Gasgemisch, die Reduktion durch ein reduzierendes Gas oder Gasgemisch, wobei diese Wasserstoff oder Wasserstoff-Inertgasgemisch sein können, und die Chlorierung durch Chlorgas erfolgt.

Vorteilhaft ist, daß das Material nach der Oxidation und vor der Reduktion mit Inertgas, wie zum Beispiel mit Stickstoff, gespült wird, sowie weiterhin, daß Chlorverbindungen, welche im dritten Temperaturbereich nicht flüchtig sind, nach Abkühlen des Produkts ausgewaschen werden, beispielsweise mit Wasser, und endlich, daß das Material, wenn es sich um einen Feststoff handelt, vor der Oxidation zerkleinert wird.

Zur Durchführung des erfindungsgemäßen Verfahrens kann vorteilhaft eine Vorrichtung verwendet werden, wie sie in der FR-PS 1 547 653 zur reduzierenden Halogenierung von edelmetallhältigen Materialien unter Erhalt flüchtiger Edelmetallhalogenide beschrieben ist.

Demgemäß ist die Erfindung auch auf die Verwendung einer Vorrichtung mit einem Reaktorgefäß (1), das mit einer im Inneren des Reaktorgefäßes angeordneten Verteileinrichtung (12) zur Abstützung von zu behandelndem Material und zur Verteilung von Behandlungsmedium, einem durch eine Zuführleitung (7) gespeisten Behandlunsmediumeinlaß im unteren Berich des Reaktorgefäßes (1), einem Behandlungsmediumauslaß (5) im oberen Bereich des Reaktorgefäßes (1) und einer an der Außenseite (2) des Reaktorgefäßes (1) angebrachten Heizeinrichtung (15) versehen ist, zur Durchführung des erfindungsgemäßen Verfahrens gerichtet, die bevorzugt anstelle der oder zusätzlich zur an der Außenseite des Reaktorgefäßes (1) angeordneten Heizeinrichtung (15) eine Heizeinrichtung in der Zuführleitung (7) aufweist.

Insbesondere ist eine Vorrichtung bevorzugt, bei der im Inneren des Reaktorgefäßes (1) im Bereich des Behandlungsmediumeinlasses ein Wärmetauscher (16) angeordnet ist, der das Behandlungsmedium auf die erforderliche Temperatur bringt.

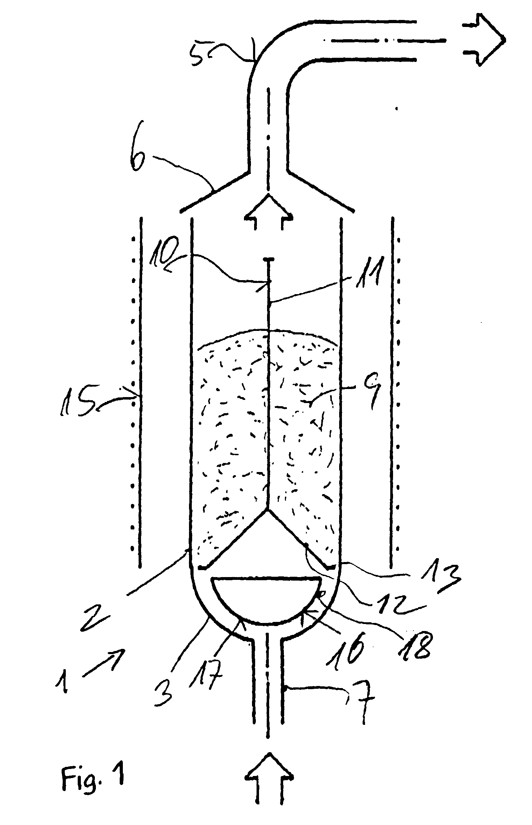

Nachstehend werden Ausführungsformen der vorliegenden Erfindungen anhand der beiliegenden Zeichnung näher erläutert. Die einzige Figur dieser Zeichnung zeigt schematisch und in einem Vertikalschnitt eine Einrichtung zur Durchführung des vorliegenden Verfahrens.

Die in der Zeichnung dargestellte Einrichtung weist ein Reaktionsgefäss 1 auf, welches einen im wesentlichen zylinderförmigen Mantel 2 aufweist. Das Gefäss 1 umfasst auch einen Boden 3, welcher mit dem Gefässmantel 1 einstückig ist und welcher im dargestellten Fall halbkugelförmig ist. Dem oberen Ende des Gefässmantels 2 ist eine Abzugsvorrichtung 5 zugeordnet, durch welche gasförmige und flüchtige Komponenten aus dem Inneren des Reaktors 1 entweichen können.

Die Abzugsvorrichtung 5 umfasst einen Kollektor 6, welcher die Form des Mantels eines Konusses aufweist. Die den grösseren Durchmesser aufweisende Grundfläche dieses Kollektors 6 ist der oberen Mündung des Gefässmantels 2 zugewandt, wobei diese Partie des Kollektors 6 diese obere Mantelmündung überdeckt. An die andere Grunafläche des Konusmantels 6, welche den kleineren Durchmesser aufweist, ist eine Austrittleitung 5 angeschlossen, in welcher ein Ventilator (nicht dargestellt) eingebaut ist. An das Ende dieser Austrittleitung 5 ist ein Wäscher, vorteilhaft ein Venturiwäscher (nicht dargestellt) in einer an sich bekannten Weise angeschlossen.

An den Boden 3 des Gefässes 1 ist eine Einlassleitung 7 einerends angeschlossen, welche zur Einführung eines gasförmigen Behandlungsmediums in das Innere des Reaktors 1 dient. Im dargestellten Fall schliesst sich die Einlassleitung 7 an die mittlere und zuunterst liegende Partie des Reaktorbodens 3 an.

Im Inneren des Gefässes 1 und im Bereich des Mantels 2 dieses Gefässes 1 ist ein Halter 10 für den Einsatz 9 aus dem zu behandelnden Material angeordnet. Dieser Halter 10 weist eine sich etwa im Achsialbereich des Gefässmantels 2 befindliche Haltestange 11 auf, welche in der Achsialrichtung dieses Mantels 2 verläuft. Am unteren Ende dieser Haltestange 11 ist eine Vorrichtung 12 zur Verteilung des Medium- bzw. Gasstromes angebracht.

Die Verteilvorrichtung 12 ist als Mantel eines Kegels ausgeführt, dessen Spitze an das untere Ende der Haltestange 11 angeschlossen ist. Die äussere Seite des Randes des Kegelmantels 12 ist mit einem Kragen 13 versehen, dessen äussere Kante an der Innenseite des Reaktormantels 2 anliegt. Dieser Kragen 13 ist als ein flacher und praktisch in einer horizontalen Ebene Liegender Ring ausgeführt. Auf dem Kegelmantel 12 und auf dem Kragen 13 ruht der Einsatz 9.

Die Kegelwand 12 ist aus einem Geflecht, sodass das gasförmige Medium-durch diese Wand 12 zum Einsatz 9 gelangen kann. Die Grösse der Maschen des Geflechtes kann an die Grösse der Stücke des zu behandelnden Materials 9 so angepasst sein, dass die Materialstücke durch das Geflecht 12 nicht durchfallen können. Die konische Form des Vorrichtungsmantels 12 vergrössert die Berührungsfläche zwischen dem Mantel 12 und dem Einsatz 9. Je grösser diese Fläche ist, um so grösser ist die Menge des gasförmigen Mediums, welches in das Innere des Einsatzes 9 gelangen kann.

Die zur Durchführung der einzelnen Verfahrensschritte notwendige Wärme wird in das Reaktionsgefäss 1 bzw. in den Einsatz 9 durch die Wand 2 des Gefässes 1 oder/und durch Vorbeheizung der in das Gefäss 1 eingeführten Gase eingebracht. Die Vorbeheizung des gasförmigen Behanalungsmediums erfolgt vorteilhaft, bevor die Gase in das Einlassrohr 7 gelangen und diese Vorbeheizung kann dabei in einer an sich bekannten Weise durchgeführt werden. Der Mantel 2 des Gefässes 1 ist von einer Heizvorrichtung 15 umgeben, welche durch elektrischen Strom, Gas, Oel oder ähnliches beheizt werden kann. Die durch diese Vorrichtung 15 erzeugte Wärme dringt durch die Reaktorwand 2 hindurch.

im Inneren des Reaktorgefässes 1, und zwar im Breich des Einlasses 7 im Boden 3 des Gefässes 1 befindet sich ein Wärmetauscher 16. Dieser Wärmetauscher 16 erhitzt das gasförmige Behandlungsmedium, welcnes durch das Einlassrohr 7 in den Reaktor 1 gelangt, auf die jeweils erforderliche Betriebstemperatur. Der Grundkörper 17 dieses Wärmetauschers 16 ist halbkugelförmig und die halbkugelförmige Bodenwand 18 diese Grundkörpers 17 ist dem Boden 3 des Gefässes 1 zugewandt. Die Mitte der dem Grundkörper 17 entsprechenden Kugel fällt mit der Mitte der dem Gefässboden 3 entsprechenden Kugel zusammen. Zwischen der Wand des halbkugelförmigen Wärmetauscherbodens 18 und der Wand des halbkugelförmigen Gefässbodens 3 ist im Aequatorbereich dieser somit ein ringförmiger Soalt vorhanden, welcher sich an den Mantel 2 des Reaktors 1 anschliesst und durch welchen das Behandlungsmedium zum Verteiler 12 gelangt. Von der Wand 2 des Reaktors wird das Medium durch die kegelförmige Vorrichtung 12 über die ganze Fläcne dieser Vorrichtung 12 verteilt, sodass das gasfömige Behandlungsmeaium über die gesamte Fläche der Verteilvorrichtung 12 in den Materialeinsatz 9 gelangt.

Das Material, welches im vorliegenden Verfahren behandelt bzw. aufbereitet wird, kann ein Feststoffgemisch oder eine flüssige oder zumindest fliessfähige Legierung sein. Es kann sich beispielsweise um sogenannte Konzentrate aus Ni- oder Cu- oder Zn-Raffinerien handeln. Solche Konzentrate werden an Edelmetallraffinerien zur Gewinnung der Edel- und Platinmetalle angeliefert. Dieses Material enthält Edelmetalle bzw. Metalle der Platingruppe sowie Verunreinigungen. Diese Metalle können verunreinigt sein mit S, Se, Ag, Te, Cu, Ni, As, Sb un Pb. Wenn das Material ein Feststoff ist, dann liegt es während der Behandlung im vorliegenden Verfahren vorteilhaft in einer zerkleinerten Form vor. Das Material muss somit unter Umständen zunächst verkleinert werden. Das Einsatzgut 9 soll eine Oberfläche von Mindestens 5 m²/kg aufweisen.

Das Einsatzgut 9, welches sich in Stückform befindet, wird in den Reaktor 1 von oben her eingebracht, sodass es auf dem Halter 10 ruht. Der Reaktor 1 ist so ausgebildet, dass das gasförmige Behandlungsmedium durch die Gasverteilungsvorrichtung 12 in die Feststoffphase 9 eindringt. Der Reaktor 1 wird auf die für den jeweiligen Verfahrensschritt notwendige Betriebstemperatur gebracnt, was durch die Heizvorrichtung 15 und/oder den Wärmetauscher 16 und/oaer Vorbeheizung des gasförmigen Mediums erreicht werden kann. Das Behandlungsmedium dringt durch das Einsatzgut 9 hindurcn und es reagiert dabei mit dem Einsatzgut 9. Das Behanalungsmeaium und flüchtige Reaktionsprodukte treten aus dem Oberteil des Einsatzgutes 9 heraus und sie werden mittels der Abzugsvorrichtung 5 aus dem Reaktorgefäss 1 abgesaugt und zum Wäscher geführt.

Während eines ersten Behandlungsschrittes im Reaktor 1 wird das Material zunächst einer oxidierenden Behandlung bei einer Temperatur unterzogen, welche innerhalb eines ersten Temperaturbereiches liegt. Diese Oxidation erfolgt durch Sauerstoff oder ein Gasgemisch, welches Sauerstoff enthält. Dieses Gasgemisch kann beispielsweise 20% Sauerstoff und 80% Inertgas oder Luft enthalten. Der Temperaturbereich, innerhalb welchem die Oxidation durchgeführt wird, liegt zwischen 200 und 800 Grad Celsius. Vorzugsweise liegt dieser Bereich zwischen 400 und 500 Grad Celsius.

In diesem Verfahrensschritt werden jene Begleitelemente aus dem Material entfernt, die mit Sauerstoff flüchtige Verbindungen bilden. Diese Begleitelemente können vor allem Schwefel und Selen sein. Nach der Oxidation kann der Reaktor 1 und sein Inhalt mit einem Inertgas, wie z.B. mit Stickstoff, gespült werden.

Das Einsatzgut 9 wird anschliessend einer reduzierenden Behandlung bei einer Temperatur unterzogen, welche innerhalb eines zweiten Temperaturbereiches Liegt. Diese Reduktion erfolgt mit Hilfe eines reduzierenaen Gases oder Gasgemisches, wobei diese Wasserstoff bzw. ein Wasserstoff-Inertgas-Gemisch sein können. Beim Wasserstoff-Inertgas-Gemisch kann es sich um ein Wasserstoff-Stickstoff-Gemisch handeln, welches mindestens 1% Wasserstoff enthält. Metalle, welche im vorherigen Verfahrensschritt Oxide gebildet haben, werden bei der Reduktion in ihre metallische Form rückgeführt. Der genannte zweite Temperaturbereich liegt zwischen 200 und 1000 Grad Celsius und vorzugsweise zwischen 600 und 800 Grad Celsius. In diesem Verfahrensschritt werden flüchtige Sauerstoffverbindungen aus dem Einsatz 9 entfernt. Anschliessend kann, wenn dies aus Sicherheitsgründen erforderlich ist, mit einem Inertgas, wie z.B. mit Stickstoff, nachgespült werden, wodurch unter anderem H2-Reste entfernt werden.

Anschliessend wird das Material des Einsatzes 9 chloriert, indem Chlorgas in den Reaktor 1 eingeleitet wird. Das Chlorieren erfolgt bei einer Temperatur, welche innerhalb eines dritten Temperaturbereiches liegt und dieser dritte Temperaturbereich liegt zwischen 800 und 1300 Grad Celsius und vorteilhaft zwischen 900 und 1150 Grad Celsius.

Eine Reihe von Elementen bilden mit dem Chlorgas unter den angegebenen Bedingungen, im Gegensatz zu den Platingruppenmetallen und zu Gold, stabile Chlorverbindungen, wie z.B. Metallchloride, wie z.B. Kupfernickelchlorid, Nickelchlorid, Silberchlorid usw. Diese Chlorverbindungen sind flüchtig und werden mit Reaktionsgas aus dem Feststoffgemisch ausgetragen und im Wäscher, der ein Venturiwäscher sein kann, auf bekannte Weise ausgewaschen und weiterbehandelt. Sofern nicht flüchtige Chlorverbindungen gebildet werden, können diese nach Erkalten des Feststoffgemisches durch Auswaschen mit Wasser, mit wässrigen oder anderen Lösungen vom Feststoff abgetrennt werden.

Nach Abschluss dieses Behandlungsverfahrens bleiben Gold sowie Platin, Palladium, Iridium und Rhodium als Rückstand zurück und diese sind von den Begleitmetallen und den begleitenden Elementen befreit. Auch SiO2 kann zurückbleiben.

Dieses Verfahren ist nicht nur auf Feststoffe bzw. Feststoffgemische sondern auch auf Legierungen im flüssigen Zustand anwendbar. In diesem Fall muss allerdings für die Zufuhr einer so grossen Menge von Reaktionsgas in den Reaktor 1 gesorgt werden, dass die fliessfähige Legierung durch den Gasverteiler 12 nicht hindurchfliesst.

## Patentansprüche

1. Verfahren zur Aufbereitung eines Materials, welches Edelmetalle bzw. Metalle der Platingruppe sowie Verunreinigungen enthält, dadurch gekennzeichnet, daß das Material zunächst einer oxidierenden Behandlung bei einer Temperatur unterzogen wird, welche innerhalb eines ersten Temperaturbereiches zwischen 200°C und 800°C liegt, daß das Material anschließend einer reduzierenden Behandlung bei einer Temperatur unterzogen wird, welche innerhalb eines zweiten Temperaturbereiches zwischen 200°C und 1000°C liegt, und daß das Material schließlich bei einer Temperatur chloriert wird, welche innerhalb eines dritten Temperaturbereichs zwischen 800 °C und 1300°C liegt.

2. Verfahren nach Anspruch 1, dadurch gekennzeichnet, daß die Behandlung des Materials in den einzelnen Stufen durch gasförmige Substanzen erfolgt, wobei die Oxidation durch Sauerstoff oder ein Sauerstoff enthaltendes Gasgemisch, die Reduktion durch ein reduzierendes Gas oder Gasgemisch, wobei diese Wasserstoff oder Wasserstoff-Inertgasgemisch sein können, und die Chlorierung durch Chlorgas erfolgt.

3. Verfahren nach Anspruch 1, dadurch gekennzeichnet, daß der erste Temperaturbereich zwischen 400°C und 500°C liegt, daß der zweite Temperaturbereich zwischen 600°C und 800°C liegt, und daß der dritte Temperaturbereich zwischen 900°C und 1150°C liegt.

4. Verfahren nach Anspruch 1, dadurch gekennzeichnet, daß das Material nach der Oxidation und vor der Reduktion mit Inertgas, wie zum Beispiel mit Stickstoff, gespült wird.

5. Verfahren nach Anspruch 2, dadurch gekennzeichnet, daß Chlorverbindungen, welche im dritten Temperaturbereich nicht flüchtig sind, nach Abkühlen des Produkts ausgewaschen werden, beispielsweise mit Wasser.

6. Verfahren nach Anspruch 1, dadurch gekennzeichnet, daß das Material, wenn es sich um einen Feststoff handelt, vor der Oxidation zerkleinert wird.

7. Verwendung einer Vorrichtung mit einem Reaktorgefäß (1), das mit einer im Inneren des Reaktorgefäßes angeordneten Verteileinrichtung (12) zur Abstützung von zu behandelndem Material und zur Verteilung von Behandlungsmedium, einem durch eine Zuführleitung (7) gespeisten Behandlunsmediumeinlaß im unteren Berich des Reaktorgefäßes (1), einem Behandlungsmediumauslaß (5) im oberen Bereich des Reaktorgefäßes (1) und einer an der Außenseite (2) des Reaktorgefäßes (1) angebrachten Heizeinrichtung (15) versehen ist, zur Durchführung des Verfahrens nach einem der Ansprüche 1-6.

8. Verwendung einer Vorrichtung nach Anspruch 7, die anstelle der oder zusätzlich zur an der Außenseite des Reaktorgefäßes (1) angeordneten Heizeinrichtung (15) eine Heizeinrichtung in der Zuführleitung (7) aufweist, zur Durchführung des Verfahrens nach einem der Ansprüche 1-6.

9. Verwendung einer Vorrichtung nach Anspruch 7 oder 8, bei der im Inneren des Reaktorgefäßes (1) im Bereich des Behandlungsmediumeinlasses ein Wärmetauscher (16) angeordnet ist, der das Behandlungsmedium auf die erforderliche Temperatur bringt, zur Durchführung des Verfahrens nach einem der Ansprüche 1-6.

## Claims

1. A method for dressing a material comprising noble metals and platinum group metals, respectively, as well as impurities, characterised in that the material is first subjected to an oxidising treatment at a temperature within a first temperature range between 200°C and 800°C, that the material is subsequently subjected to a reducing treatment at a temperature within a second temperature range between 200°C and 1000°C, and that the material is finally chlorinated at a temperature within a third temperature range between 800°C and 1300°C.

2. The method according to claim 1, characterised in that the treatment of the material in the individual steps is carried out by gaseous substances, that oxidation is carried out by means of oxygen or an oxygen-containing gas mixture, that reduction is carried out by a reducing gas or gas mixture, which may be hydrogen or hydrogen/inert gas mixture, and that chlorination is carried out by means of chlorine gas.

3. The method according to claim 1, characterised in that the first temperature range is between 400°C and 500°C, that the second temperature range is between 600°C and 800°C, and that the third temperature range is between 900°C and 1150°C.

4. The method according to claim 1, characterised in that the material is scavenged with inert gas, for instance nitrogen, after oxidation and before reduction.

5. The method according to claim 2, characterised in that chlorine compounds that are non-volatile in the specified third temperature range are washed out, for instance with water, after cooling of the product.

6. The method according to claim 1, characterised in that the material, if it is a solid, is comminuted before oxidation.

7. Use of a device comprising a reactor vessel (1), which, in the interior of said reactor vessel, is provided with a distributing device (12) for supporting material to be treated and for distributing treatment medium, an inlet for the treatment medium supplied by a supply line (7) in the lower region of the reactor vessel (1), an outlet (5) for the treatment medium in the upper region of the reactor vessel (1), and a heater (15) mounted on the outside (2) of the reactor vessel (1) for carrying out the method according to any of claims 1 to 6.

8. Use of the device according to claim 7, which instead of or in addition to the heater (15) mounted on the outside (2) of the reactor vessel (1) has a heater inside the supply line (7), for carrying out the method according to any of claims 1 to 6.

9. Use of the device according to claim 7 or claim 8, wherein a heat exchanger (16) is arranged in the interior of the reactor vessel (1), namely in the region of the inlet for treatment medium, which heat exchanger brings the treatment medium to the necessary operating temperature, for carrying out the method according to any of claims 1 to 6.

## Revendications

1. Procédé pour l'enrichissement d'une matière contenant des métaux précieux ou des métaux du groupe de platine ainsi que des impuretés, caractérisé en ce que la matière est d'abord soumise à un traitement d'oxydation à une température se situant dans une première plage de températures entre 200°C et 800°C, que la matière est ensuite soumise à un traitement de réduction à une température se situant dans une deuxième plage de températures entre 200°C et 1.000°C et que la matière est finalement chlorée à une température se situant dans une troisième plage de températures entre 800°C et 1.300°C.

2. Procédé selon la revendication 1, caractérisé en ce que le traitement de la matière est effectué, dans ses phases individuelles, par des substances gazeuses, l'oxydation étant effectuée par l'oxygène ou un mélange gazeux contenant de l'oxygène, la réduction étant effectuée par un gaz réducteur ou un mélange gazeux, soit hydrogène, soit un mélange d'hydrogène et de gaz inerte, et le chlorage étant effectué par le gaz du chlore.

3. Procédé selon la revendication 1, caractérisé en ce que la première plage de températures est entre 400°C et 500°C, que la deuxième plage de températures est entre 600°C et 800°C et que la troisième plage de températures est entre 900°C et 1.150°C.

4. Procédé selon la revendication 1 caractérisé en ce que la matière, après l'oxydation et avant la réduction est soumise à un rinçage avec du gaz inerte, par exemple avec du nitrogène.

5. Procédé selon la revendication 2, caractérisé en ce que des composés du chlore qui ne sont pas volatils dans la troisième plage de températures sont lavés après le refroidissement du produit, par exemple avec de l'eau.

6. Procédé selon la revendication 1, caractérisé en ce que la matière, lorsqu'il s'agit d'une matière solide, est fragmentée avant l'oxydation.

7. Utilisation d'un dispositif ayant un récipient de réaction (1) qui comprend un distributeur (12) au sein du récipient de réaction pour soutenir la matière à traiter et pour distribuer le milieu de traitement, une entrée du milieu de traitement alimentée par un conduit d'alimentation (7) dans la région inférieure du récipient de réaction (1), une sortie du milieu de traitement (5) dans la région supérieure du récipient de réaction (1) et un appareil de chauffage (15) disposé à la face extérieure (2) du récipient de réaction (1) afin d'effectuer le procédé selon une des revendications 1-6.

8. Utilisation d'un dispositif selon la revendication 7 qui comprend, au lieu ou en plus de l'appareil de chauffage (15) disposé à la face extérieure du récipient de réaction (1) un appareil de chauffage dans le conduit d'alimentation (7) afin d'effectuer le procédé selon une des revendications 1-6.

9. Utilisation d'un dispositif selon la revendication 7 ou 8 ayant au sein du récipient de réaction (1), dans la région de l'entrée du milieu de traitement, un échangeur de chaleur (16) qui amène le milieu de traitement à la température requise afin d'effectuer le procédé selon une des revendications 1-6.
